(19) Europäisches Patentamt / European Patent Office / Office européen des brevets

(11) **EP 3 415 969 A1**

(12) **EUROPEAN PATENT APPLICATION**

(43) Date of publication:
**19.12.2018 Bulletin 2018/51**

(51) Int Cl.:
**G02B 21/02** $^{(2006.01)}$

(21) Application number: **18177240.1**

(22) Date of filing: **12.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2017 JP 2017116873**

(71) Applicant: **OLYMPUS CORPORATION**
**Hachioji-shi**
**Tokyo 192-8507 (JP)**

(72) Inventors:
• **ABE, Kenichiro**
**Tokyo, 192-8507 (JP)**

• **KOBAYASHI, Masaru**
**Tokyo, 192-8507 (JP)**
• **YAMANOUCHI, Kazuhiko**
**Tokyo, 192-8507 (JP)**
• **KANEDA, Toru**
**Tokyo, 192-8507 (JP)**
• **AKAHANE, Masaki**
**Tokyo, 192-8507 (JP)**

(74) Representative: **Gunzelmann, Rainer**
**Wuesthoff & Wuesthoff**
**Patentanwälte PartG mbB**
**Schweigerstraße 2**
**81541 München (DE)**

(54) **OBJECTIVE**

(57) An objective includes a first lens group that has a positive refractive power and a second lens group that has a negative refractive power. The objective satisfies conditional expressions below.

$$0.2 \leq NA_{ob} \leq 1 \qquad (1)$$

$$2.9mm \leq D0 \times NA_{ob} \leq 30mm \qquad (2)$$

$$30mm \leq L \leq 70mm \qquad (3)$$

$$0.0001 \leq RMS_h/\lambda_h \leq 0.035 \qquad (4)$$

$NA_{ob}$ is a numerical aperture on an object side of the objective. D0 is a distance on an optical axis between an object plane and a lens surface of the objective that is situated closest to the object side. L is a distance on the optical axis between the object plane and a lens surface of the objective that is situated closest to the image side. $RMS_h$ is an axial RMS wave aberration with respect to the h line. $\lambda_h$ is a wavelength of the h line.

EP 3 415 969 A1

**Description**

**Background of the Invention**

**Field of the Invention**

The present disclosure relates to an objective.

**Description of the Related Art**

In recent years, there is a need for a high measurement accuracy when a three-dimensional shape or a surface roughness of an electronic component is measured. A confocal microscope that is known as one of the microscopes conventionally used for a three-dimensional measurement is suitable for a three-dimensional measurement in that it is also possible to perform a high-accuracy measurement in a height direction.

When a confocal microscope is used, it is possible to achieve a higher measurement accuracy by reducing the radius of an airy disc and the depth of focus. Thus, it is preferable that measurement be performed with short-wavelength light. Taking this into consideration, it is preferable that an objective used in a confocal microscope have a satisfactory aberration performance for short-wavelength light.

A conventional objective that has a satisfactory aberration performance in a short-wavelength range that is equal to or shorter than the wavelength of the h line is disclosed in, for example, Japanese Laid-open Patent Publication No. 2004-118072.

The objective disclosed in Japanese Laid-open Patent Publication No. 2004-118072 has a short working distance. Thus, when the objective disclosed in Japanese Laid-open Patent Publication No. 2004-118072 is used in a microscope for three-dimensional measurement, there is room for improvement in the workability in measurement. Further, it is difficult to deal with a subject having a greatly uneven surface.

In light of the problem described above, an object of the present invention is to provide an objective that has a long working distance and favorably corrects an aberration in a short-wavelength range.

**Summary of the Invention**

An objective according to an aspect of the present invention includes: a first lens group that has a positive refractive power and converts a divergent pencil of light from an object point into a convergent pencil of light; and a second lens group that has a negative refractive power and is arranged closer to an image side than the first lens group. The objective satisfies conditional expressions below.

$$0.2 \leq NA_{ob} \leq 1 \qquad (1)$$

$$2.9mm \leq D0 \times NA_{ob} \leq 30mm \qquad (2)$$

$$30mm \leq L \leq 70mm \qquad (3)$$

$$0.0001 \leq RMS_h/\lambda_h \leq 0.035 \qquad (4)$$

$NA_{ob}$ is a numerical aperture on an object side of the objective. D0 is a distance on an optical axis between an object plane and a lens surface of the objective that is situated closest to the object side. L is a distance on the optical axis between the object plane and a lens surface of the objective that is situated closest to the image side. $RMS_h$ is an axial RMS wave aberration with respect to the h line. $\lambda_h$ is a wavelength of the h line.

**Brief Description of the Drawings**

The present invention will be more apparent from the following detailed description when the accompanying drawings are referenced.

FIG. 1 is a cross-sectional view of an objective 1 according to a first example;

FIGS. 2A to 2D are diagrams of an aberration in the objective 1;

FIG. 3 is a cross-sectional view of an objective 2 according to a second example;

FIGS. 4A to 4D are diagrams of an aberration in the objective 2;

FIG. 5 is a cross-sectional view of an objective 3 according to a third example;

FIGS. 6A to 6D are diagrams of an aberration in the objective 3;

FIG. 7 is a cross-sectional view of an objective 4 according to a fourth example; and

FIGS. 8A to 8D are diagrams of an aberration in the objective 4.

## Description of the Embodiments

An objective according to an embodiment of the present invention is described. The objective according to the present embodiment (hereinafter simply referred to as an objective) is an infinity-corrected microscope objective used in combination with a tube lens.

The objective includes a first lens group that has a positive refractive power and converts a divergent pencil of light from an object point into a convergent pencil of light, and a second lens group that has a negative refractive power and is arranged closer to the image side than the first lens group. A lens component, in the first lens group, that is situated closest to the image side is a lens component that is situated closest to the object side and that plays a role in converting a divergent pencil of light from an object point into a convergent pencil of light and emitting the convergent pencil of light. In other words, when the objective has a plurality of lens surfaces that emit a convergent pencil of light, a lens surface situated closest to the object side among the plurality of lens surfaces is a lens surface, in the first lens group, that is situated closest to the image side. A boundary between the first lens group and the second lens group can be identified according to the characteristics described above.

As used herein, the pencil of light is a bundle of light rays emitted from a point on an object (an object point). Further, the lens component is a lens block in which only two surfaces, a surface on the object side and a surface on the image side, from among lens surfaces through which a light ray from an object point passes, have contact with air (or an immersion liquid). The lens component may be a single lens, and the lens component may be a cemented lens.

The first lens group converts a divergent pencil of light from an object point into a convergent pencil of light and causes the convergent pencil of light to enter the second lens group. The second lens group converts the convergent pencil of light from the first lens group into a collimated pencil of light. It is possible to make the height of a marginal ray in the second lens group smaller than the height of a marginal ray in the first lens group by the first lens group converting a divergent pencil of light from an object point into a convergent pencil of light and causing the pencil of light to enter the second lens group. This makes it possible to effectively correct the Petzval sum in the second lens group having a negative refractive power, which results in being able to favorably correct a field curvature in a wide field of view.

The objective is configured to satisfy Conditional Expressions (1) to (4) below.

$$0.2 \leq NA_{ob} \leq 1 \qquad (1)$$

$$2.9mm \leq D0 \times NA_{ob} \leq 30mm \qquad (2)$$

$$30mm \leq L \leq 70mm \qquad (3)$$

$$0.0001 \leq RMS_h/\lambda_h \leq 0.035 \qquad (4)$$

$NA_{ob}$ is a numerical aperture on the object side of the objective. D0 is a distance on an optical axis between an object plane and a lens surface of the objective that is situated closest to the object side. L is a distance on the optical axis between the object plane and a lens surface of the objective that is situated closest to the image side. $RMS_h$ is an axial RMS (root mean square) wave aberration with respect to the h line. $\lambda_h$ is a wavelength of the h line. The object plane is a light collecting plane on which a pencil of light is focused when a collimated pencil of light enters the objective from the image side, and is a focal plane on the object side of the objective. The h line is a spectral line of 404.65 nm.

Conditional Expression (1) is a conditional expression that is used to obtain a sufficient resolution. It is possible to prevent the divergence angle of a marginal ray that enters the objective from becoming too large by preventing $NA_{ob}$

from exceeding the upper limit. This makes it possible to primarily correct a coma sufficiently, which results in being able to obtain a sufficient resolution. Further, it is possible to make the radius of an airy disc sufficiently small by preventing $NA_{ob}$ from falling below the lower limit. Furthermore, it is also possible to make the depth of focus small, which results in being able to obtain a sufficient resolution.

Conditional Expression (2) is a conditional expression that is used to achieve a sufficient resolution, as well as a high work efficiency and a high versatility when measurement is performed. It is possible to prevent a working distance from too long with respect to a numerical aperture (NA) by preventing $D0 \times NA_{ob}$ from exceeding the upper limit. Thus, it is possible to achieve a satisfactory aberration performance, which results in being able to achieve a sufficient resolution. Further, it is possible to prevent the working distance from becoming too short by preventing $D0 \times NA_{ob}$ from falling below the lower limit. As a result, a worker does not have to pay so much attention in order to prevent the objective from colliding with a subject, and this results in being able to achieve a high work efficiency when measurement is performed. In particular, it is often the case that an objective having a low numerical aperture is used to observe a subject having a greatly uneven surface. A sufficiently long working distance is ensured for an objective having a low numerical aperture by preventing $D0 \times NA_{ob}$ from falling below the lower limit. This makes it possible to perform measurement even if it is a subject having a greatly uneven surface, which results in being able to achieve a high versatility.

Conditional Expression (3) is a conditional expression that is used to achieve a sufficient resolution, as well as a high work efficiency and a high versatility when measurement is performed. It is possible to prevent the obj ective from becoming too large by preventing L from exceeding from the upper limit. This makes it possible to ensure the work efficiency when measurement is performed. Further, it is possible to effectively arrange a plurality of lenses in the objective by preventing L from falling below the lower limit. This makes it possible to achieve a specified aberration performance, which results in being able to obtain a sufficient resolution.

Conditional Expression (4) is a conditional expression that is primarily used to obtain a sufficient resolution. When $RMS_h/\lambda_h$ does not exceed the upper limit, an aberration around the center of an image plane will not become too large even if a measurement wavelength of a microscope that includes the objective is short. Thus, it is possible to achieve a sufficient resolution. Further, when $RMS_h/\lambda_h$ does not fall below the lower limit, it is possible to favorably correct an RMS wave aberration without making the objective larger by using an excessive number of lenses. Thus, there is no need to take measures such as decreasing the need for other aberrations such as a coma, in order to favorably correct an RMS wave aberration. This results in being able to achieve a high work efficiency and a sufficient resolution without sacrificing either of them.

The objective having the configuration described above has a long working distance and makes it possible to favorably correct an aberration in a short-wavelength range.

The objective may be configured to satisfy Conditional Expression (2-1) or Conditional Expression (2-2) below instead of Conditional Expression (2). Further, the objective may be configured to satisfy Conditional Expression (3-1) or Conditional Expression (3-2) below instead of Conditional Expression (3). Furthermore, the objective may be configured to satisfy Conditional Expression (4-1) or Conditional Expression (4-2) below instead of Conditional Expression (4).

$$3\text{mm} \leq D0 \times NA_{ob} \leq 15\text{mm} \qquad (2\text{-}1)$$

$$3.2\text{mm} \leq D0 \times NA_{ob} \leq 7\text{mm} \qquad (2\text{-}2)$$

$$35\text{mm} \leq L \leq 67\text{mm} \qquad (3\text{-}1)$$

$$40\text{mm} \leq L \leq 63\text{mm} \qquad (3\text{-}2)$$

$$0.0003 \leq RMS_h/\lambda_h \leq 0.025 \qquad (4\text{-}1)$$

$$0.0005 \leq RMS_h/\lambda_h \leq 0.02 \qquad (4\text{-}2)$$

A preferable configuration of the objective is described below.

It is preferable that the first lens group include at least one cemented lens. The reason is that, taking into consideration the work efficiency when a measurer adjusts the position or the posture of a subject, it is preferable that a chromatic aberration of the objective be favorably corrected in a visible wavelength range even if it is a microscope that performs measurement with short-wavelength light. It is possible to favorably correct an axial chromatic aberration when the first lens group includes at least one cemented lens. In particular, it is preferable that a cemented lens be arranged in a region in the first lens group in which the height of a marginal ray is large, that is, in a region in the first lens group that is relatively close to the image plane. This arrangement makes it possible to correct an axial chromatic aberration more effectively.

It is preferable that the second lens group include at least two cemented lenses . It is possible to make the working distance of the objective sufficiently long by making the refractive power in the first lens group strong while making a region occupied by the first lens group as small as possible. However, there is a possibility that, in this configuration, an axial chromatic aberration will not be sufficiently corrected by a cemented lens included in the first lens group. Thus, it is preferable that the axial chromatic aberration be largely corrected in the second lens group. Thus, it is preferable that the second lens group include at least two cemented lenses.

It is preferable that the second lens group include a meniscus lens component that has a concave surface facing the image side. As described above, a convergent pencil of light enters the second lens group. Thus, when the meniscus lens component that has a concave surface facing the image side is arranged in the second lens group, it is possible to make the convergent level of a convergent pencil of light lower in the second lens group while suppressing the occurrence of a spherical aberration. Further, because the concave surface of a lens of the meniscus lens component is arranged in a position in which a ray height is smaller than the ray height of the convex surface that is a lens surface on the incident side of the meniscus lens component, it is possible to favorably correct the Petzval sum.

It is preferable that the above meniscus lens component included in the second lens group be a two-piece cemented lens that includes a positive lens and a negative lens in order from the object side. The reason is that it will be possible to favorably correct a chromatic aberration if the meniscus lens component is a cemented lens. Further, it is preferable that the meniscus lens component be thick, taking into consideration the effects of correcting the Petzval sum that are provided by using the meniscus lens component. It is also preferable on this point that the meniscus lens component be a cemented lens. The reason is that, if the meniscus lens component is a cemented lens, it will be possible to correct the Petzval sum while efficiently using a space in the objective.

It is preferable that the objective be configured to satisfy at least one of Conditional Expression (5) to Conditional Expression (8) below.

$$-30 \leq R_{11}/(f \times NA_{ob}) \leq -1.5 \qquad (5)$$

$$1 \leq (R_{11}+R_{12})/(R_{11}-R_{12}) \leq 10 \qquad (6)$$

$$-1 \leq D_{U1}/R_{12} \leq -0.36 \qquad (7)$$

$$0.3 \leq D_{G1}/D_{OM} \leq 0.91 \qquad (8)$$

f is a focal length of the objective. $R_{11}$ is a radius of curvature of a lens surface of a first lens component, the lens surface being situated closest to the object side in the first lens component, the first lens component being included in the objective and arranged closest to the object side. $R_{12}$ is a radius of curvature of a lens surface of the first lens component, the lens surface being situated closest to the image side in the first lens component. $D_{U1}$ is a distance on the optical axis from the lens surface of the first lens component that is situated closest to the object side to the lens surface of the first lens component that is situated closest to the image side. $D_{G1}$ is a distance on the optical axis from a lens surface of the first lens group that is situated closest to the object side to a lens surface of the first lens group that is situated closest to the image side. $D_{OM}$ is a distance on the optical axis from the object plane to the lens surface of the first lens group that is situated closest to the image side.

Conditional Expression (5) is a conditional expression that is used to make the working distance of the objective sufficiently long and is used to primarily favorably correct a spherical aberration, a coma, and a field curvature. The radius of curvature of a concave surface that is the lens surface on the object side of the first lens component does not become too small by preventing $R_{11}/(f \times NA_{ob})$ from exceeding the upper limit, and this results in being able to sufficiently converting a bundle of axial light rays and a bundle of off-axis light rays even when the working distance is long. This makes it possible to suppress the occurrence of a spherical aberration and a coma in an optical system situated closer to the image side than the first lens component. In particular, there is a need for a long working distance in the case of a low-power objective that has a long focal length, so it is preferable that the radius of curvature of the concave surface that is the lens surface on the object side of the first lens component be large. Further, the radius of curvature of the concave surface that is the lens surface on the object side of the first lens component does not become too large by preventing $R_{11}/(f \times NA_{ob})$ from falling below the lower limit, and this results in being able to favorably correct the Petzval sum. Furthermore, the incident angle and the refraction angle of an axial marginal ray and an off-axis marginal ray on the lens surface do not become too large, which results in being able to also favorably correct a spherical aberration and a coma.

Conditional Expression (6) is a conditional expression that is used to make the working distance of the objective sufficiently long and is used to primarily favorably correct a spherical aberration and a coma. The radius of curvature of the concave surface that is the lens surface on the object side of the first lens component does not become too small by preventing $(R_{11}+R_{12})/(R_{11}-R_{12})$ from exceeding the upper limit, and this results in being able to sufficiently converting a bundle of axial light rays and a bundle of off-axis light rays even when the working distance is long. This makes it possible to suppress the occurrence of a spherical aberration and a coma on a lens surface on the image side of the first lens component. Further, the radius of curvature of the concave surface that is the lens surface on the object side of the first lens component does not become too large by preventing $(R_{11}+R_{12})/(R_{11}-R_{12})$ from falling below the lower limit, and the incident angle and the refraction angle of an axial marginal ray and an off-axis marginal ray on the lens surface do not become too large. This results in being able to favorably correct a spherical aberration and a coma.

Conditional Expression (7) is a conditional expression that is used to make the working distance of the objective sufficiently long and is used to primarily favorably correct a spherical aberration and a field curvature. The first lens component does not become too thin by preventing $D_{U1}/R_{12}$ from exceeding the upper limit, and this results in being able to favorably correct the Petzval sum. Further, when the first lens component does not become too thin, it is possible to ensure a sufficient stiffness, which results in being able to suppress a deformation of a lens surface that occurs due to a polishing of a lens and a retention of a lens. The variation of aberrations due to a deformation of a lens surface is greater if the wavelength is shorter, so it is preferable that the first lens component be sufficiently thick in order to achieve a satisfactory aberration performance in a short-wavelength range. Furthermore, the first lens component does not become too thick by preventing $D_{U1}/R_{12}$ from falling below the lower limit, so the height of a marginal ray on the lens surface on the image side of the first lens component does not become too large despite a large working distance. Moreover, the radius of curvature of a convex surface that is the lens surface on the image side of the first lens component does not become too small. This makes it possible to suppress the occurrence of a spherical aberration on the lens surface on the image side of the first lens component.

Conditional Expression (8) is a conditional expression that is used to make the working distance of the objective sufficiently long and is used to primarily favorably correct a spherical aberration. When $D_{G1}/D_{OM}$ does not exceed the upper limit, a region occupied by the first lens group does not become too large and it is possible to make the working distance sufficiently large. This makes it possible to favorably correct aberrations while gradually making the height of a marginal ray of light converted into a convergent pencil of light small in the second lens group. Further, when $D_{G1}/D_{OM}$ does not fall below the lower limit, the region occupied by the first lens group does not become too small, and this results in being able to suppress the occurrence of a spherical aberration in the first lens group.

The objective may be configured to satisfy Conditional Expression (5-1) or Conditional Expression (5-2) below instead of Conditional Expression (5). Further, the objective may be configured to satisfy Conditional Expression (6-1) or Conditional Expression (6-2) below instead of Conditional Expression (6). Furthermore, the objective may be configured to satisfy Conditional Expression (7-1) or Conditional Expression (7-2) below instead of Conditional Expression (7). Moreover, the objective may be configured to satisfy Conditional Expression (8-1) or Conditional Expression (8-2) below instead of Conditional Expression (8).

$$-20 \leq R_{11}/(f \times NA_{ob}) \leq -2.5 \qquad (5\text{-}1)$$

$$-15 \leq R_{11}/(f \times NA_{ob}) \leq -3 \qquad (5\text{-}2)$$

$$1.3 \leq (R_{11}+R_{12})/(R_{11}-R_{12}) \leq 7 \qquad (6\text{-}1)$$

$$1.5 \leq (R_{11}+R_{12})/(R_{11}-R_{12}) \leq 5 \qquad (6\text{-}2)$$

$$-0.9 \leq D_{U1}/R_{12} \leq -0.4 \qquad (7\text{-}1)$$

$$-0.85 \leq D_{U1}/R_{12} \leq -0.44 \qquad (7\text{-}2)$$

$$0.35 \leq D_{G1}/D_{OM} \leq 0.87 \qquad (8\text{-}1)$$

$$0.4 \leq D_{G1}/D_{OM} \leq 0.84 \qquad (8\text{-}2)$$

A more preferable configuration of the objective is described below.

First, the case in which the objective is an objective with a high NA, that is, the case in which the objective satisfies Conditional Expression (9) below is described.

$$NA_{ob} \geq 0.3 \quad (9)$$

It is preferable that the objective include a lens component that has a concave surface facing the image side and that is arranged closest to the image side. The lens component arranged closest to the image side is hereinafter also referred to as a last lens component. When a long working distance is achieved in an objective with a high numerical aperture, the height of a marginal ray in a region in the second lens group that is situated near an object becomes large. In addition, it is difficult to make a region occupied by the second lens group large. In this situation, if the last lens component has a concave surface on the image side, it will be possible to cause the last lens component to play a role in converting a convergent pencil of light into a collimated pencil of light. This makes it possible to gradually make the height of a marginal ray small in the second lens group, which results in being able to suppress the occurrence of a spherical aberration.

It is preferable that the first lens group include at least one three-piece cemented lens. When the first lens group includes a three-piece cemented lens, this permits the first lens group to more favorably correct an axial chromatic aberration while having a specified refractive power. The depth of focus is reduced if the numerical aperture becomes higher, so there is a possibility that an effect of correcting an axial chromatic aberration will be provided significantly. Thus, the configuration described above is particularly effective in an objective with a high NA.

It is preferable that at least one three-piece cemented lens that is included in the first lens group include one biconcave lens and two positive lenses that are arranged across the biconcave lens from each other. In the three-piece cemented lens, when a biconcave lens is used for an achromatic negative lens, it is possible to more largely correct an axial chromatic aberration. Further, positive lenses are cemented on both sides of the biconcave lens, so as to provide a specified refractive power to the three-piece cemented lens.

Next, the case in which the objective is an objective with a higher NA, that is, the case in which the objective satisfies Conditional Expression (10) below is described.

$$NA_{ob} \geq 0.62 \quad (10)$$

It is preferable that the second lens group include at least one three-piece cemented lens. When the second lens group includes a three-piece cemented lens, this permits the second lens group to more favorably correct an axial chromatic aberration while having a specified refractive power. The depth of focus is reduced if the numerical aperture becomes higher, so there is a possibility that an effect of correcting an axial chromatic aberration will be provided significantly. Thus, the configuration described above is particularly effective in an objective with a high NA.

It is preferable that at least one three-piece cemented lens that is included in the second lens group include one biconvex lens and two negative lenses that are arranged across the biconvex lens from each other. In general, a negative lens having a high dispersivity that is used in a cemented lens has a refractive index higher than that of a positive lens. Thus, when negative lenses are used as the two outermost of the lenses constituting the three-piece cemented lens, each outermost lens having an air interface, this results in being able to make the radiuses of curvature of the air interfaces small. This makes it possible to reduce a spherical aberration. Further, effects of suppressing a spherical aberration may be provided more significantly if the numerical aperture becomes higher. Thus, the configuration described above is particularly effective in an objective with a high NA.

When the second lens group includes a meniscus lens component that has a concave surface facing the image side, it is preferable that the objective include a single lens that has a negative refractive power and is arranged between the meniscus lens component and the last lens component. The correction of a coma and the correction of an astigmatism easily conflict with each other between the meniscus lens component and the last lens component. It is possible to correct a coma and an astigmatism in a balanced manner by providing a negative lens in such a region. Further, when the negative lens is a single lens, it is possible to prevent the length of the objective from becoming too long. It is particularly preferable that an objective with a high NA in which there is a need to correct a coma and an astigmatism in a more balanced manner be configured as described above.

When the objective includes, between the meniscus lens component and the last lens component, a single lens having a negative refractive power, it is preferable that the objective be configured to satisfy Conditional Expression (11) below.

$$-0.5 \leq (R_{01}+R_{02})/(R_{01}-R_{02}) \leq 0.5 \quad (11)$$

$R_{01}$ is a radius of curvature of a lens surface on the object side of the single lens. $R_{02}$ is a radius of curvature of a lens surface on the image side of the single lens.

Conditional Expression (11) is a conditional expression that is used to correct a coma and an astigmatism in a balanced manner. The radius of curvature of a concave surface on the image side of the single lens does not become too small by preventing $(R_{01}+R_{02})/(R_{01}-R_{02})$ from exceeding the upper limit. This prevents the incident angle of an off-axis light ray that is incident on the concave surface on the image side of the single lens from becoming too large. This results in being able to suppress the occurrence of an astigmatism. Further, the radius of curvature of the concave surface on the image side of the single lens does not become too large by preventing $(R_{01}+R_{02})/(R_{01}-R_{02})$ from falling below the lower limit. In a region in which this single lens is arranged, the concave surface on the image side plays a role in correcting a coma that occurs on a convex surface of a lens arranged in the first lens group. Thus, it is possible to correct a coma favorably by preventing $(R_{01}+R_{02})/(R_{01}-R_{02})$ from falling below the lower limit.

The objective may be configured to satisfy Conditional Expression (11-1) or Conditional Expression (11-2) below instead of Conditional Expression (11).

$$-0.5 \leq (R_{01}+R_{02})/(R_{01}-R_{02}) \leq 0.3 \quad (11-1)$$

$$-0.5 \leq (R_{01}+R_{02})/(R_{01}-R_{02}) \leq 0 \quad (11-2)$$

When the second lens group includes a meniscus lens component that has a concave surface facing the image side and when the meniscus lens component is a two-piece cemented lens that includes a positive lens and a negative lens in order from the object side, it is preferable that the objective be configured to satisfy at least one of Conditional Expression (12) to Conditional Expression (15) below.

$$-5 \leq \nu_{M1}-\nu_{M2} \leq 60 \quad (12)$$

$$-0.01 \leq \theta_{M1}-\theta_{M2} \leq 0.15 \quad (13)$$

$$-0.2 \leq n_{M2}-n_{M1} \leq 0.15 \quad (14)$$

$$-15 \leq L/R_{MC} \leq -5 \quad (15)$$

$\nu_{M1}$ is an Abbe number of the positive lens included in a two-piece cemented lens that is a meniscus lens component. $\nu_{M2}$ is an Abbe number of the negative lens included in the two-piece cemented lens. $\theta_{M1}$ is a partial dispersion ratio of the positive lens included in the two-piece cemented lens. $\theta_{M2}$ is a partial dispersion ratio of the negative lens included in the two-piece cemented lens. $n_{M1}$ is a refractive index of the positive lens included in the two-piece cemented lens with respect to the h line. $n_{M2}$ is a refractive index of the negative lens included in the two-piece cemented lens with respect to the h line. $R_{MC}$ is a radius of curvature of a joint surface of the two-piece cemented lens.

Conditional Expression (12) is a conditional expression that defines a difference in Abbe number between a positive lens and a negative lens. It is possible to satisfy a relationship of a partial dispersion ratio described later using an existing material, by preventing $v_{M1}$-$v_{M2}$ from exceeding the upper limit. Further, it is possible to suppress the occurrence of an axial chromatic aberration by preventing $v_{M1}$-$v_{M2}$ from falling below the lower limit.

Conditional Expression (13) is a conditional expression that is used to favorably correct an axial chromatic aberration in a measurement wavelength and an axial chromatic aberration in a visible range. In general, when an axial chromatic aberration in a visible range is corrected in an entire optical system, an axial chromatic aberration in a measurement wavelength near the h line is corrected excessively. It is possible to correct a chromatic aberration in a visible range while preventing an axial chromatic aberration near the h line from being corrected excessively, by preventing $\theta_{M1}$-$\theta_{M2}$ from exceeding the upper limit. Further, it is possible to satisfy the above-described relationship of a difference in Abbe number using an existing material, by preventing $\theta_{M1}$-$\theta_{M2}$ from falling below the lower limit.

Conditional Expression (14) is a conditional expression that defines a difference in refractive index with respect to the h line between a positive lens and a negative lens. It is possible to largely correct a chromatic aberration while suppressing an aberration that occurs on a joint surface, by preventing $n_{M2}$-$n_{M1}$ from exceeding the upper limit and from falling below the lower limit. Further, it is possible to suppress a spherical aberration and a coma while favorably correcting an axial chromatic aberration in a visible range and an axial chromatic aberration near the h line, by preventing $n_{M2}$-$n_{M1}$ from falling below the lower limit.

Conditional Expression (15) is a conditional expression that defines a ratio between a distance on the optical axis between the object plane and the lens surface of the objective that is situated closest to the image side, and a radius of curvature of the joint surface. When $L/R_{MC}$ does not exceed the upper limit, this makes it possible to configure the joint surface of the meniscus lens component that is a two-piece cemented lens to have a concave surface facing the object side and to make the radius of curvature sufficiently small. Thus, it is possible to make a spherical aberration and a coma small while favorably correcting an axial chromatic aberration in a visible range and an axial chromatic aberration near the h line. The radius of curvature of the joint surface does not become too small when $L/R_{MC}$ does not fall below the lower limit, which results in being able to configure the meniscus lens component to have a lens shape that can be easily processed.

The objective may be configured to satisfy Conditional Expression (12-1) or Conditional Expression (12-2) instead of Conditional Expression (12). Further, the objective may be configured to satisfy Conditional Expression (13-1) or Conditional Expression (13-2) instead of Conditional Expression (13). Furthermore, the objective may be configured to satisfy Conditional Expression (14-1) or Conditional Expression (14-2) instead of Conditional Expression (14). Moreover, the objective may be configured to satisfy Conditional Expression (15-1) or Conditional Expression (15-2) instead of Conditional Expression (15).

$$-3 \leq v_{M1}-v_{M2} \leq 40 \qquad (12-1)$$

$$0 \leq v_{M1}-v_{M2} \leq 30 \qquad (12-2)$$

$$-0.05 \leq \theta_{M1}-\theta_{M2} \leq 0.1 \qquad (13-1)$$

$$0 \leq \theta_{M1}-\theta_{M2} \leq 0.05 \qquad (13-2)$$

$$-0.15 \leq n_{M2}-n_{M1} \leq 0.1 \qquad (14-1)$$

$$-0.1 \leq n_{M2}-n_{M1} \leq 0.02 \qquad (14-2)$$

$$-12 \leq L/R_{MC} \leq -6 \qquad (15-1)$$

$$-10 \leq L/R_{MC} \leq -7 \qquad (15-2)$$

Next, the case in which the objective is a low-power objective, that is, the case in which the objective satisfies Conditional Expression (16) below is described.

$$f \geq 10\text{mm} \quad (16)$$

It is preferable that the objective include a positive lens that has a convex surface facing the image side and that is arranged closest to the image side. The positive lens and a lens arranged on the object side of the positive lens may be cemented together, so as to be a cemented lens. In general, there is a need for a longer working distance if the power of an objective is lower. The Petzval correction in a lens surface on the object side of the first lens group is more likely to be insufficient when the working distance is large. Thus, it is preferable that, in a low-power objective, a positive lens that has a convex surface facing the image side be arranged closest to the image side so as to form a gauss group constituted of the positive lens and the meniscus lens component that has a concave surface facing the image side and that is included in the second lens group. The reason is that this makes it possible to favorably correct the Petzval sum in the gauss group. Further, a low-power objective has a wide field of view. Thus, the configuration described above is also suitable for a low-power objective because great effects are provided due to the correction of the Petzval sum.

It is preferable that the first lens group include two lens components. When the first lens group is configured by two or less lens components, it is possible to make the space for the first lens group small, which results in being able to ensure a long working distance. However, if the first lens group is configured by only a single lens component, the occurrence of an aberration in the first lens group will be increased excessively. When the first lens group is configured by two lens components, it is possible to obtain a long working distance and to favorably correct an aberration. The configuration described above is particularly suitable when the objective has a long working distance of 8 mm or more.

It is preferable that the first lens component included in the first lens group be a cemented lens. When the first lens component arranged in a region closest to the object side is a cemented lens, it is possible to favorably correct a lateral chromatic aberration. In a low-power objective whose working distance is long, the height of a marginal ray in the first lens component is large, so it is also possible to favorably correct an axial chromatic aberration in the first lens component. Further, a low-power obj ective has a wide field of view. Thus, the configuration described above is also suitable for a low-power objective because great effects are provided due to the correction of a lateral chromatic aberration.

When a positive lens that has a convex surface facing the image side and that is arranged closest to the image side is included in the objective, it is preferable that the objective be configured to satisfy Conditional Expression (17) below.

$$63 \leq \nu_E \leq 100 \quad (17)$$

$\nu_E$ is an Abbe number of the positive lens arranged closest to the image side.

Conditional Expression (17) is a conditional expression that is used to favorably correct an axial chromatic aberration. In a low-power objective, the exit pupil diameter with respect to the numerical aperture is large, so the height of a marginal ray on a region near the exit end is large. When the positive lens is a lens having a low dispersivity that satisfies Conditional Expression (17), it is possible to suppress the occurrence of an axial chromatic aberration.

The objective may be configured to satisfy Conditional Expression (17-1) or Conditional Expression (17-2) instead of Conditional Expression (17).

$$66 \leq \nu_E \leq 95 \quad (17\text{-}1)$$

$$72 \leq \nu_E \leq 90 \quad (17\text{-}2)$$

Examples of the objective described above are described below.

Example 1

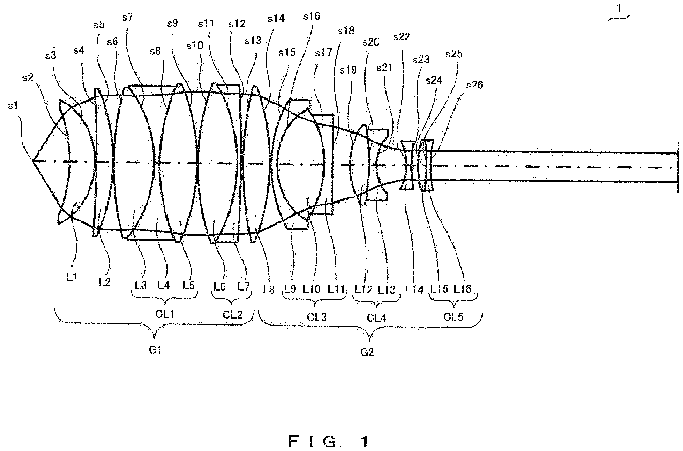

FIG. 1 is a cross-sectional view of an objective 1 according to the present example. The objective 1 is an infinity-corrected microscope objective. The objective 1 includes a first lens group G1 that has a positive refractive power and converts a divergent pencil of light from an object point into a convergent pencil of light, and a second lens group G2 that has a negative refractive power and is arranged closer to the image side than the first lens group G1.

The first lens group G1 includes, in order from the object side, a meniscus lens L1 (first lens component) that has a concave surface facing the object side, a meniscus lens L2 that has a concave surface facing the object side, a cemented lens CL1, and a cemented lens CL2.

The cemented lens CL1 is a three-piece cemented lens. The cemented lens CL1 includes one biconcave lens L4 and two positive lenses (a lens L3 and a lens L5) that are arranged across the biconcave lens L4 from each other. Both of the lenses L3 and L5 are biconvex lenses . The cemented lens CL2 is a two-piece cemented lens. The cemented lens CL2 includes a biconvex lens L6 that is arranged on the object side, and a meniscus lens L7 that has a concave surface facing the object side and that is arranged on the image side.

The second lens group G2 includes a biconvex lens L8, a cemented lens CL3, a cemented lens CL4, a biconcave lens L14, and a cemented lens CL5 in order from the object side.

The cemented lens CL3 is a three-piece cemented lens. The cemented lens CL3 includes one biconvex lens L10 and two negative lenses (a lens L9 and a lens L11) that are arranged across the biconvex lens L10 from each other. The lens L9 is a meniscus lens that has a concave surface facing the image side, and the lens L11 is a biconcave lens. The cemented lens CL4 is a two-piece cemented lens. The cemented lens CL4 is a meniscus lens component that has a concave surface facing the image side, and includes a biconvex lens L12 that is a positive lens arranged on the object side, and a biconcave lens L13 that is a negative lens arranged on the image side. Here, OHARA's glass S-NPH1 is used for the lens L12, and OHARA's glass S-LAH60 is used for the lens L13. The cemented lens CL5 is a two-piece cemented lens. The cemented lens CL5 includes a biconvex lens L15 that is arranged on the object side, and a biconcave lens L16 that is arranged on the image side.

The following is lens data of the objective 1. INF in the lens data represents infinity ($\infty$).

| | | Objective 1 | | |
|---|---|---|---|---|
| s | r | d | nh | $\nu$d |
| 1 | INF | 4.429 | | |
| 2 | -12.2098 | 2.992 | 1.92092 | 40.76 |
| 3 | -6.6905 | 0.2 | | |
| 4 | -80.5661 | 1.957 | 1.87397 | 37.16 |
| 5 | -15.84 | 0.1 | | |
| 6 | 24.8421 | 4.877 | 1.44645 | 94.93 |
| 7 | -10.5784 | 0.677 | 1.68331 | 39.68 |
| 8 | 16.466 | 4.53 | 1.44645 | 94.93 |
| 9 | -16.7623 | 0.1 | | |
| 10 | 19.9743 | 4.76 | 1.44645 | 94.93 |
| 11 | -13.61 | 0.5 | 1.68331 | 39.68 |
| 12 | -91.6085 | 0.2 | | |
| 13 | 28.0489 | 3.255 | 1.44645 | 94.93 |
| 14 | -18.5445 | 0.2 | | |
| 15 | 11.2838 | 0.705 | 1.77951 | 32.26 |
| 16 | 6.0918 | 5.71 | 1.44645 | 94.93 |
| 17 | -8.6094 | 0.985 | 1.77951 | 32.26 |
| 18 | 263.4436 | 2.148 | | |
| 19 | 6.3095 | 2.352 | 1.87658 | 22.76 |
| 20 | -17.4626 | 0.885 | 1.87397 | 37.16 |
| 21 | 3.7424 | 3.633 | | |
| 22 | -4.4327 | 0.627 | 1.60535 | 61.14 |
| 23 | 12.9237 | 0.799 | | |
| 24 | 9.4311 | 1 | 1.87658 | 22.76 |
| 25 | -18.0882 | 0.5 | 1.58604 | 56.36 |
| 26 | 10.2697 | | | |

s represents a surface number, r represents a radius of curvature (mm), d represents surface spacing (mm), nh represents a refractive index with respect to the h line, and vd represents an Abbe number. These symbols are also used in examples described subsequently. A surface number s1 represents an object plane. Surfaces represented by surface numbers s2 and s26 are a lens surface of the objective 1 that is situated closest to the object side, and a lens surface of the objective 1 that is situated closest to the image side, respectively.

The following is various data of the objective 1. $\beta$ is a magnification when the objective is used in combination with a tube lens whose focal length is 180 mm, FIY is a maximum object height, and a $f_{U1}$ is a focal length of the first lens component. The other parameters are as described above.

$\beta$=100.0, FIY=0.09mm, $NA_{ob}$=0.8, $RMS_h/\lambda_h$=0.007, D0=4.429mm, L=48.122mm, f=1.8mm, $R_{11}$=-12.2098mm, $R_{12}$=-6.6905mm, $D_{U1}$=2.992mm, $f_{U1}$=12.756mm, $D_{OM}$=25.123mm, $D_{G1}$=20.694mm, $R_{01}$=-4.4327mm, $R_{02}$=12.9237mm, $v_{M1}$=22.76, $v_{M2}$=37.16, $\theta_{M1}$=0.637, $\theta_{M2}$=0.578, $n_{M1}$=1.87658, $n_{M2}$=1.87397, $R_{MC}$=-17.4626mm, $f_{G1}$=7.668mm, $f_{G2}$=-27.988mm, $v_E$=N/A

The objective 1 satisfies Conditional Expression (1) to Conditional Expression (11), Conditional Expression (13), and Conditional Expression (14) as described below.

(1) $NA_{ob}$=0.8
(2) $D0 \times NA_{ob}$=3.543mm
(3) L=48.122mm
(4) $RMS_h/\lambda_h$=0.007
(5) $R_{11}/ (f \times NA_{ob})$=-8.479
(6) $(R_{11}+R_{12}) / (R_{11}-R_{12})$=3.424
(7) $D_{U1}/R_{12}$=-0.447
(8) $D_{G1}/D_{OM}$=0.824
(9) $NA_{ob}$=0.8
(10) $NA_{ob}$=0.8
(11) $(R_{01}+R_{02}) / (R_{01}-R_{02})$=-0.489
(12) $v_{M1}-v_{M2}$=-14.4
(13) $\theta_{M1}-\theta_{M2}$=0.059
(14) $n_{M2}-n_{M1}$=-0.00261
(15) $L/R_{MC}$=-2.756
(16) f=1.8mm
(17) N/A

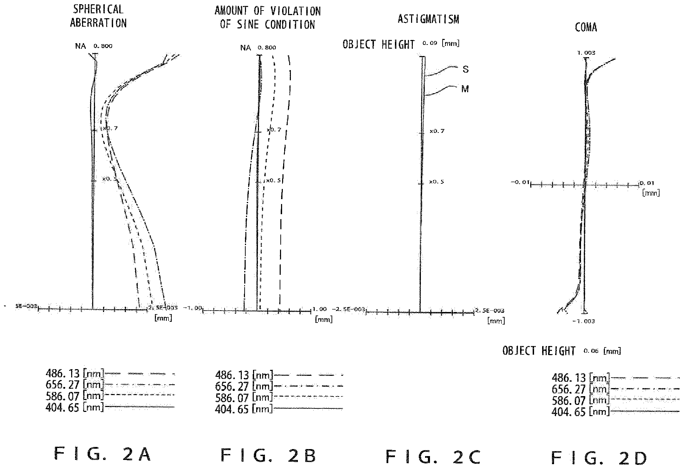

FIGS. 2A to 2D are diagrams of an aberration in the objective 1, and illustrate aberrations in the object plane when an infinite pencil of light enters from the image side. FIG. 2A is a spherical aberration diagram, FIG. 2B illustrates an amount of violation of the sine condition, FIG. 2C is an astigmatism diagram, and FIG. 2D is a diagram of a coma at the level of 70 percent of the maximum object height, the level being 0.06mm. In the figures, "M" represents a meridional component and "S" represents a sagittal component. These descriptions are also used in the examples described subsequently. As illustrated in FIGS. 2A to 2D, the aberrations in a short-wavelength range (h line) are favorably corrected in the objective 1.

Example 2

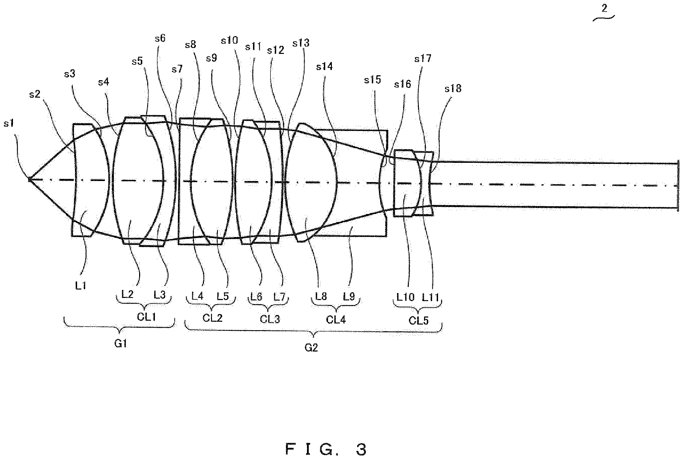

FIG. 3 is a cross-sectional view of an objective 2 according to the present example. The objective 2 is an infinity-corrected microscope objective. The objective 2 includes a first lens group G1 that has a positive refractive power and converts a divergent pencil of light from an object point into a convergent pencil of light, and a second lens group G2 that has a negative refractive power and is arranged closer to the image side than the first lens group G1.

The first lens group G1 includes, in order from the object side, a meniscus lens L1 (first lens component) that has a concave surface facing the object side, and a cemented lens CL1.

The cemented lens CL1 is a two-piece cemented lens. The cemented lens CL1 includes a biconvex lens L2 that is arranged on the object side, and a meniscus lens L3 that has a concave surface facing the object side and that is arranged on the image side.

The second lens group G2 includes a cemented lens CL2, a cemented lens CL3, a cemented lens CL4, and a cemented lens CL5 in order from the object side.

The cemented lens CL2 is a two-piece cemented lens. The cemented lens CL2 includes a plano-concave lens L4 that has a flat surface facing the object side and is arranged on the object side, and a biconvex lens L5 that is arranged on the image side. The cemented lens CL3 is a two-piece cemented lens. The cemented lens CL3 includes a biconvex lens L6 that is arranged on the object side, and a meniscus lens L7 that has a concave surface facing the object side and is arranged on the image side. The cemented lens CL4 is a two-piece cemented lens. The cemented lens CL4 is a meniscus lens component that has a concave surface facing the image side, and includes a biconvex lens L8 that is a positive lens arranged on the object side, and a biconcave lens L9 that is a negative lens arranged on the image side. Here, OHARA's glass S-FPL51 is used for the lens L8, and OHARA's glass S-FSL5 is used for the lens L9. The cemented lens CL5 is a two-piece cemented lens. The cemented lens CL5 includes a plano-convex lens L10 that has a flat surface facing the object side and is arranged on the object side, and a biconcave lens L11 that is arranged on the image side.

The following is lens data of the objective 2. A surface number s1 represents an object plane. Surfaces represented by surface numbers s2 and s18 are a lens surface of the objective 2 that is situated closest to the object side, and a lens surface of the objective 2 that is situated closest to the image side, respectively.

Objective 2

| s | r | d | nh | νd |
|---|---|---|---|---|
| 1 | INF | 5.593 | | |
| 2 | -25.6575 | 3.941 | 1.84619 | 46.62 |
| 3 | -8.338 | 0.4 | | |
| 4 | 14.3452 | 6.122 | 1.44645 | 94.93 |
| 5 | -8.5948 | 1.5 | 1.58604 | 56.36 |
| 6 | -15.2733 | 0.4 | | |
| 7 | INF | 1.4 | 1.7958 | 40.1 |
| 8 | 9.1992 | 5.038 | 1.44645 | 94.93 |
| 9 | -16.0599 | 0.3 | | |
| 10 | 21.1726 | 4.432 | 1.44645 | 94.93 |
| 11 | -9.2601 | 1.3 | 1.68331 | 39.68 |
| 12 | -38.588 | 0.3 | | |
| 13 | 11.5352 | 6.27 | 1.50721 | 81.54 |
| 14 | -6.3486 | 5.149 | 1.49898 | 70.23 |
| 15 | 7.054 | 1.823 | | |
| 16 | INF | 3.222 | 1.87658 | 22.76 |
| 17 | -5.4477 | 1 | 1.79918 | 49.6 |
| 18 | 10.0271 | | | |

The following is various data of the objective 2.

$\beta$=49.6, FIY=0.18mm, $NA_{ob}$=0.60, $RMS_h/\lambda_h$=0.013, D0=5.593mm, L=48.187mm, f=3.628mm, $R_{11}$=-25.6575mm, $R_{12}$=-8.338mm, $D_{U1}$=3.941mm, $f_{U1}$=13.219mm, $D_{OM}$=17.555mm, $D_{G1}$=11.963mm, $R_{01}$=N/A, $R_{02}$=N/A, $v_{M1}$=81.54, $v_{M2}$=70.23, $\theta_{M1}$=0.538, $\theta_{M2}$=0.53, $n_{M1}$=1.50721, $n_{M2}$=1.49898, $R_{MC}$=-6.3486mm, $f_{G1}$=8.522mm, $f_{G2}$=-36.895mm, $v_E$=N/A

The objective 2 satisfies Conditional Expression (1) to Conditional Expression (10), and Conditional Expression (12) to Conditional Expression (15) as described below.

(1) $NA_{ob}$=0.60
(2) $D0 \times NA_{ob}$=3.356mm
(3) L=48.187mm
(4) $RMS_h/\lambda_h$=0.013
(5) $R_{11}/(f \times NA_{ob})$=-11.787
(6) $(R_{11}+R_{12})/(R_{11}-R_{12})$=1.963
(7) $D_{U1}/R_{12}$=-0.473
(8) $D_{G1}/D_{OM}$=0.681
(9) $NA_{ob}$=0.6
(10) $NA_{ob}$=0.6
(11) N/A
(12) $v_{M1}-v_{M2}$=11.31
(13) $\theta_{M1}-\theta_{M2}$=0.008
(14) $n_{M2}-n_{M1}$=-0.00823
(15) $L/R_{MC}$=-7.590
(16) f=3.628mm
(17) N/A

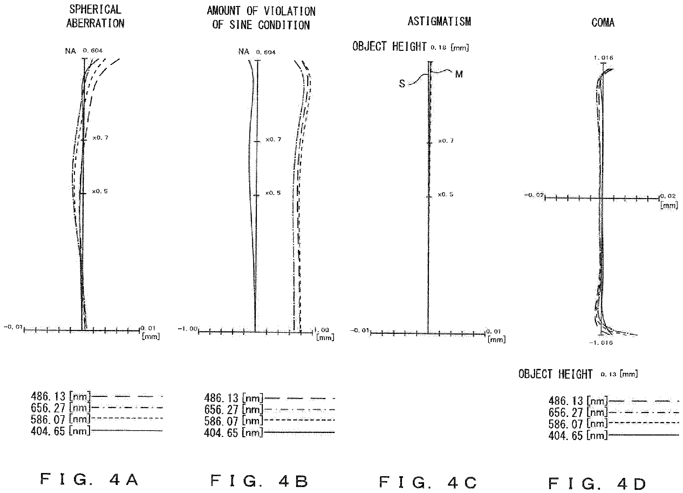

FIGS. 4A to 4D are diagrams of an aberration in the objective 2, and illustrate aberrations in the object plane when an infinite pencil of light enters from the image side. FIG. 4A is a spherical aberration diagram, FIG. 4B illustrates an amount of violation of the sine condition, FIG. 4C is an astigmatism diagram, and FIG. 4D is a diagram of a coma at the level of 70 percent of the maximum object height, the level being 0.13 mm. As illustrated in FIGS. 4A to 4D, the aberrations in a short-wavelength range (h line) are favorably corrected in the objective 2.

Example 3

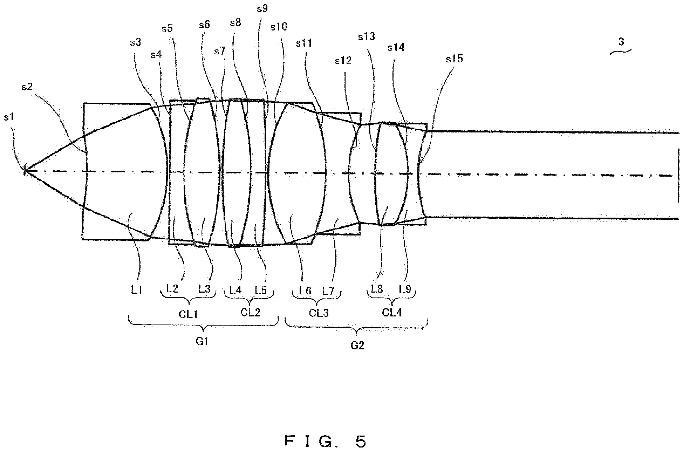

FIG. 5 is a cross-sectional view of an objective 3 according to the present example. The objective 3 is an infinity-corrected microscope objective. The objective 3 includes a first lens group G1 that has a positive refractive power and converts a divergent pencil of light from an object point into a convergent pencil of light, and a second lens group G2 that has a negative refractive power and is arranged closer to the image side than the first lens group G1.

The first lens group G1 includes, in order from the object side, a meniscus lens L1 (first lens component) that has a concave surface facing the object side, a cemented lens CL1, and a cemented lens CL2.

The cemented lens CL1 is a two-piece cemented lens. The cemented lens CL1 includes a plano-concave lens L2 that has a flat surface facing the object side and is arranged on the object side, and a biconvex lens L3 that is arranged on the image side. The cemented lens CL2 is a two-piece cemented lens. The cemented lens CL2 includes a biconvex lens L4 that is arranged on the object side, and a meniscus lens L5 that has a concave surface facing the object side and is arranged on the image side.

The second lens group G2 includes a cemented lens CL3 and a cemented lens CL4 in order from the object side.

The cemented lens CL3 is a two-piece cemented lens. The cemented lens CL3 is a meniscus lens component that has a concave surface facing the image side, and includes a biconvex lens L6 that is arranged on the object side, and a biconcave lens L7 that is arranged on the image side. Here, OHARA's glass S-PHM52 is used for the lens L6, and OHARA's glass S-NBH53 is used for the lens L7. The cemented lens CL4 is a two-piece cemented lens. The cemented lens CL4 includes a biconvex lens L8 that is arranged on the object side, and a biconcave lens L9 that is arranged on the image side.

The following is lens data of the objective 3. A surface number s1 represents an object plane. Surfaces represented by surface numbers s2 and s15 are a lens surface of the objective 3 that is situated closest to the object side, and a lens surface of the objective 3 that is situated closest to the image side, respectively.

Objective 3

| s | r | d | nh | νd |
|---|---|---|---|---|
| 1 | INF | 7.113 | | |
| 2 | -15.5202 | 9.164 | 1.92092 | 40.76 |
| 3 | -11.0918 | 0.3 | | |
| 4 | INF | 1.6 | 1.75777 | 34.71 |
| 5 | 18.2347 | 4.151 | 1.50721 | 81.54 |
| 6 | -20.2882 | 0.3 | | |
| 7 | 31.4591 | 3.283 | 1.50721 | 81.54 |
| 8 | -20.2522 | 1.7 | 1.77951 | 32.26 |
| 9 | -80.42 | 0.3 | | |
| 10 | 11.507 | 6.642 | 1.63451 | 63.33 |
| 11 | -14.6577 | 2.641 | 1.77951 | 32.26 |
| 12 | 8.8141 | 3.068 | | |
| 13 | 23.2103 | 3.8 | 1.86494 | 25.42 |
| 14 | -8.253 | 1.15 | 1.63756 | 44.27 |
| 15 | 9.7217 | | | |

The following is various data of the objective 3.

$\beta$=19.9, FIY=0.45mm, $NA_{ob}$=0.45, $RMS_h/\lambda_h$=0.003, D0=7.113mm, L=45.212mm, f=9.062mm, $R_{11}$=-15.5202mm, $R_{12}$=-11.0918mm, $D_{U1}$=9.164mm, $f_{U1}$=21.189mm, $D_{OM}$=27.611mm, $D_{G1}$=20.498mm, $R_{01}$=N/A, $R_{02}$=N/A, $v_{M1}$=63.33, $v_{M2}$=32.26, $\theta_{M1}$=0.544, $\theta_{M2}$=0-59, $n_{M1}$=1.63451, $n_{M2}$=1.77951, $R_{MC}$=-14.6577mm, $f_{G1}$=13.726mm, $f_{G2}$=-77.11mm, $v_E$=N/A

The objective 3 satisfies Conditional Expression (1) to Conditional Expression (10), Conditional Expression (12), and Conditional Expression (14) as described below.

(1) $NA_{ob}$=0.45

(2) $D0 \times NA_{ob}$=3.201mm
(3) L=45.212mm
(4) $RMS_h/\lambda_h$=0.003
(5) $R_{11}/ (f \times NA_{ob})$=-3.806
(6) $(R_{11}+R_{12}) / (R_{11}-R_{12})$=6.009
(7) $D_{U1}/R_{12}$=-0.826
(8) $D_{G1}/D_{OM}$=0.742
(9) $NA_{ob}$=0.45
(10) $NA_{ob}$=0.45
(11) N/A
(12) $v_{M1}-v_{M2}$=31.07
(13) $\theta_{M1}-\theta_{M2}$=-0.046
(14) $n_{M2}-n_{M1}$=0.145
(15) $L/R_{MC}$=-3.085
(16) f=9.062mm
(17) N/A

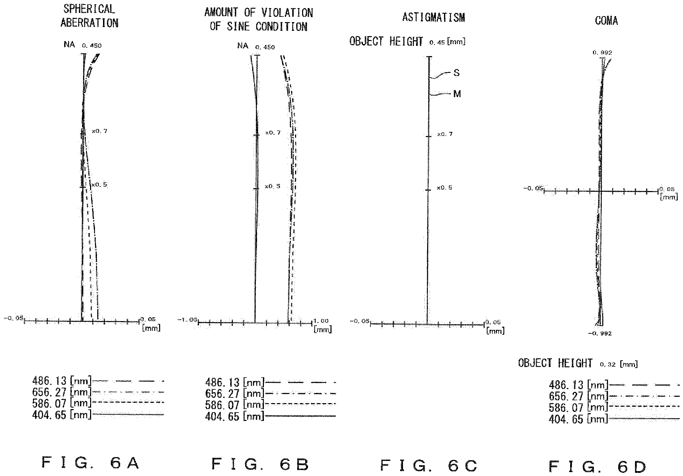

FIGS. 6A to 6D are diagrams of an aberration in the objective 3, and illustrate aberrations in the object plane when an infinite pencil of light enters from the image side. FIG. 6A is a spherical aberration diagram, FIG. 6B illustrates an amount of violation of the sine condition, FIG. 6C is an astigmatism diagram, and FIG. 6D is a diagram of a coma at the level of about 70 percent of the maximum object height, the level being 0.32 mm. As illustrated in FIGS. 6A to 6D, the aberrations in a short-wavelength range (h line) are favorably corrected in the objective 3.

Example 4

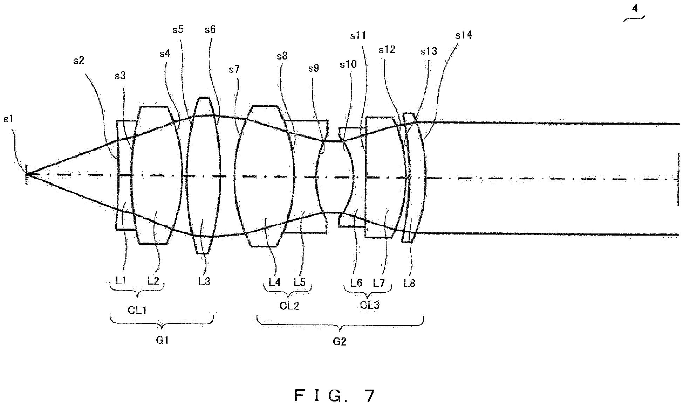

FIG. 7 is a cross-sectional view of an objective 4 according to the present example. The objective 4 is an infinity-corrected microscope objective. The objective 4 includes a first lens group G1 that has a positive refractive power and converts a divergent pencil of light from an object point into a convergent pencil of light, and a second lens group G2 that has a negative refractive power and is arranged closer to the image side than the first lens group G1.
The first lens group G1 includes a cemented lens CL1 (first lens component) and a biconvex lens L3 in order from the object side.
The cemented lens CL1 is a two-piece cemented lens. The cemented lens CL1 includes a biconcave lens L1 that is arranged on the object side, and a biconvex lens L2 that is arranged on the image side.
The second lens group G2 includes, in order from the object side, a cemented lens CL2, a cemented lens CL3, and a meniscus lens L8 that has a concave surface facing the object side.
The cemented lens CL2 is a two-piece cemented lens. The cemented lens CL2 is a meniscus lens component that has a concave surface facing the image side, and includes a biconvex lens L4 that is arranged on the object side, and a biconcave lens L5 that is arranged on the image side. Here, OHARA's glass S-FPM2 is used for the lens L4, and OHARA's glass S-NBH5 is used for the lens L5. The cemented lens CL3 is a two-piece cemented lens. The cemented lens CL3 includes a plano-concave lens L6 that has a flat surface facing the image side and is arranged on the object side, and a plano-convex lens L7 that has a flat surface facing the object side and is arranged on the image side. The meniscus lens L8 is a positive lens that has a convex surface facing the image side and is arranged closest to the image side.
The following is lens data of the objective 4. A surface number s1 represents an object plane. Surfaces represented by surface numbers s2 and s14 are a lens surface of the objective 4 that is situated closest to the object side, and a lens surface of the objective 4 that is situated closest to the image side, respectively.

Objective 4

| s | r | d | nh | νd |
|---|---|---|---|---|
| 1 | INF | 10.842 | | |
| 2 | -46.9153 | 1.5 | 1.81687 | 44.2 |
| 3 | 22.3568 | 6.03 | 1.44645 | 94.93 |
| 4 | -13.2323 | 0.5 | | |
| 5 | 21.6414 | 4 | 1.58258 | 71.3 |
| 6 | -21.6428 | 1. 674 | | |
| 7 | 12.0569 | 7.14 | 1.61009 | 67.74 |
| 8 | -12.0689 | 2.6 | 1.68331 | 39.68 |

(continued)

| s | r | d | nh | νd |
|---|---|---|---|---|
| 9 | 7.2322 | 4.48 | | |
| 10 | -5.4488 | 1.45 | 1.52977 | 64.14 |
| 11 | INF | 4.76 | 1.61009 | 67.74 |
| 12 | -11.3098 | 0.42 | | |
| 13 | -23.1836 | 1.95 | 1.50721 | 81.54 |
| 14 | -13.0205 | | | |

The following is various data of the objective 4.

$\beta$=10.0, FIY=0.9mm, $NA_{ob}$=0.30, $RMS_h/\lambda_h$=0.001, D0=10.842m, L=47.346mm, f=17.968mm, $R_{11}$=-46.9153mm, $R_{12}$=-13.2323mm, $D_{U1}$=7.53mm, $f_{U1}$=207.5mm, $D_{OM}$=22.872mm, $D_{G1}$=12.03mm, $R_{01}$=N/A, $R_{02}$=N/A, $\nu_{M1}$=67.74, $\nu_{M2}$=39.68, $\theta_{M1}$=0.544, $\theta_{M2}$=0.574, $n_{M1}$=1.52977, $n_{M2}$=1.61009, $R_{MC}$=$\infty$mm, $f_{G1}$=15.495 mm, $f_{G2}$=-90.52 mm, $\nu_E$=81.54

The objective 4 satisfies Conditional Expression (1) to Conditional Expression (9), Conditional Expression (12), Conditional Expression (14), Conditional Expression (16), and Conditional Expression (17) as described below.

(1) $NA_{ob}$=0.30
(2) $D0 \times NA_{ob}$=3.253mm
(3) L=47.346mm
(4) $RMS_h/\lambda_h$=0.001
(5) $R_{11}/(f \times NA_{ob})$=-8.703
(6) $(R_{11}+R_{12})/(R_{11}-R_{12})$=1.786
(7) $D_{U1}/R_{12}$=-0.569
(8) $D_{G1}/D_{OM}$=0.526
(9) $NA_{ob}$=0.3
(10) $NA_{ob}$=0.3
(11) N/A
(12) $\nu_{M1}-\nu_{M2}$=28.06
(13) $\theta_{M1}-\theta_{M2}$=-0.03
(14) $n_{M2}-n_{M1}$=0.08032
(15) $L/R_{MC}$=0
(16) f=17.968mm
(17) $\nu_E$=81.54

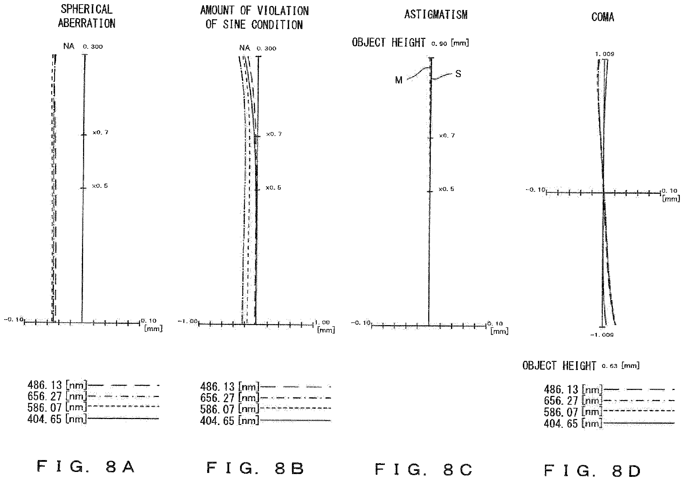

FIGS. 8A to 8D are diagrams of an aberration in the objective 4, and illustrate aberrations in the object plane when an infinite pencil of light enters from the image side. FIG. 8A is a spherical aberration diagram, FIG. 8B illustrates an amount of violation of the sine condition, FIG. 8C is an astigmatism diagram, and FIG. 8D is a diagram of a coma at the level of 70 percent of the maximum object height, the level being 0.63 mm. As illustrated in FIGS. 8A to 8D, the aberrations in a short-wavelength range (h line) are favorably corrected in the objective 4.

**Claims**

1. An objective (1;2;3;4) comprising:

a first lens group (G1) that has a positive refractive power and converts a divergent pencil of light from an object point into a convergent pencil of light; and
a second lens group (G2) that has a negative refractive power and is arranged closer to an image side than the first lens group (G1), wherein
conditional expressions

$$0.2 \leq NA_{ob} \leq 1 \qquad (1)$$

$$2.9mm \leq D0 \times NA_{ob} \leq 30mm \qquad (2)$$

$$30\text{mm} \leq L \leq 70\text{mm} \qquad (3)$$

$$0.0001 \leq RMS_h/\lambda_h \leq 0.035 \qquad (4)$$

are satisfied, where $NA_{ob}$ is a numerical aperture on an object side of the objective (1; 2; 3; 4), D0 is a distance on an optical axis between an object plane and a lens surface of the objective (1;2;3;4) that is situated closest to the object side, L is a distance on the optical axis between the object plane and a lens surface of the objective (1; 2; 3; 4) that is situated closest to the image side, $RMS_h$ is an axial RMS wave aberration with respect to h line, and $\lambda_h$ is a wavelength of the h line.

2. The objective (1;2;3;4) according to claim 1, wherein
a conditional expression

$$-30 \leq R_{11}/(f{\times}NA_{ob}) \leq -1.5 \qquad (5)$$

is satisfied, where f is a focal length of the objective (1;2;3;4) and $R_{11}$ is a radius of curvature of a lens surface of a first lens component that is situated closest to the object side, the first lens component being included in the objective (1;2;3;4) and arranged closest to the object side.

3. The objective (1; 2; 3; 4) according to claim 1 or 2, wherein
a conditional expression

$$1 \leq (R_{11}+R_{12})/(R_{11}-R_{12}) \leq 10 \qquad (6)$$

is satisfied, where $R_{11}$ is a radius of curvature of a lens surface of a first lens component that is situated closest to the object side, the first lens component being included in the objective (1;2;3;4) and arranged closest to the object side, and $R_{12}$ is a radius of curvature of a lens surface of the first lens component that is situated closest to the image side.

4. The objective (1;2;3;4) according to any one of claims 1 to 3, wherein
a conditional expression

$$-1 \leq D_{U1}/R_{12} \leq -0.36 \qquad (7)$$

is satisfied, where $D_{U1}$ is a distance on an optical axis from a lens surface of a first lens component that is situated closest to the object side to a lens surface of the first lens component that is situated closest to the image side, the first lens component being included in the objective (1;2;3;4) and arranged closest to the object side, and $R_{12}$ is a radius of curvature of the lens surface of the first lens component that is situated closest to the image side.

5. The objective (1;2;3;4) according to any one of claims 1 to 4, wherein
a conditional expression

$$0.3 \leq D_{G1}/D_{OM} \leq 0.91 \qquad (8)$$

is satisfied, where $D_{G1}$ is a distance on an optical axis from a lens surface of the first lens group (G1) that is situated closest to the object side to a lens surface of the first lens group (G1) that is situated closest to the image side, and $D_{OM}$ is a distance on the optical axis from the object plane to the lens surface of the first lens group (G1) that is situated closest to the image side.

6. The objective (1;2;3;4) according to any one of claims 1 to 5, wherein
the first lens group (G1) includes at least one cemented lens.

**7.** The objective (1;2;3;4) according to any one of claims 1 to 6, wherein
the second lens group (G2) includes at least two cemented lenses.

**8.** The objective (1;2;3;4) according to any one of claims 1 to 7, wherein
the second lens group (G2) includes a meniscus lens component that has a concave surface facing the image side.

**9.** The objective (1;2;3;4) according to claim 8, wherein
the meniscus lens component is a two-piece cemented lens that includes a positive lens and a negative lens in order from the object side.

**10.** The objective (1; 2; 3; 4) according to claim 8 or 9, wherein
a conditional expression

$$NA_{ob} \geq 0.3 \quad (9)$$

is satisfied, and
the objective (1;2;3;4) includes a lens component that has a concave surface facing the image side and is arranged closest to the image side.

**11.** The objective (1) according to any one of claims 1 to 10, wherein
the first lens group (G1) includes at least one three-piece cemented lens.

**12.** The objective (1) according to claim 11, wherein
the at least one three-piece cemented lens included in the first lens group (G1) includes
one biconcave lens, and
two positive lenses that are arranged across the biconcave lens from each other.

**13.** The objective (2) according to claim 9, wherein
conditional expressions

$$-5 \leq \nu_{M1} - \nu_{M2} \leq 60 \quad (12)$$

$$-0.01 \leq \theta_{M1} - \theta_{M2} \leq 0.15 \quad (13)$$

are satisfied, where $\nu_{M1}$ is an Abbe number of the positive lens included in the two-piece cemented lens, $\nu_{M2}$ is an Abbe number of the negative lens included in the two-piece cemented lens, $\theta_{M1}$ is a partial dispersion ratio of the positive lens included in the two-piece cemented lens, and $\theta_{M2}$ is a partial dispersion ratio of the negative lens included in the two-piece cemented lens.

**14.** The objective (1;2;3;4) according to claim 9 or 13, wherein
a conditional expression

$$-0.2 \leq n_{M2} - n_{M1} \leq 0.15 \quad (14)$$

is satisfied, where $n_{M1}$ is a refractive index of the positive lens included in the two-piece cemented lens with respect to the h line, and $n_{M2}$ is a refractive index of the negative lens included in the two-piece cemented lens with respect to the h line.

**15.** The objective (2) according to claim 9, 13, or 14, wherein
a conditional expression

$$-15 \leq L/R_{MC} \leq -5 \quad (15)$$

is satisfied, where $R_{MC}$ is a radius of curvature of a joint surface of the two-piece cemented lens.

F I G. 1

SPHERICAL
ABERRATION

NA 0.800

486.13 [nm]
656.27 [nm]
586.07 [nm]
404.65 [nm]

F I G. 2 A

AMOUNT OF VIOLATION
OF SINE CONDITION

NA 0.800

486.13 [nm]
656.27 [nm]
586.07 [nm]
404.65 [nm]

F I G. 2 B

ASTIGMATISM

OBJECT HEIGHT 0.09 [mm]

S
M

F I G. 2 C

COMA

OBJECT HEIGHT 0.06 [mm]

486.13 [nm]
656.27 [nm]
586.07 [nm]
404.65 [nm]

F I G. 2 D

F I G. 3

SPHERICAL
ABERRATION

NA  0.604

×0.7

×0.5

-0.07 |—+—+—+—+—+—+—+—| 0.01
[mm]

486.13 [nm]
656.27 [nm]
586.07 [nm]
404.65 [nm]

F I G.  4 A

AMOUNT OF VIOLATION
OF SINE CONDITION

NA  0.604

×0.7

×0.5

-1.00 |—+—+—+—+—+—+—+—| 1.00
[mm]

486.13 [nm]
656.27 [nm]
586.07 [nm]
404.65 [nm]

F I G.  4 B

ASTIGMATISM

OBJECT HEIGHT 0.18 [mm]

S            M

×0.7

×0.5

-0.01 |—+—+—+—+—+—+—+—| 0.01
[mm]

F I G.  4 C

COMA

1.016

-0.02 |—+—+—+—+—+—+—+—| 0.02
[mm]

-1.016

OBJECT HEIGHT 0.13 [mm]

486.13 [nm]
656.27 [nm]
586.07 [nm]
404.65 [nm]

F I G.  4 D

F I G. 5

SPHERICAL
ABERRATION

NA 0.450

AMOUNT OF VIOLATION
OF SINE CONDITION

NA 0.450

ASTIGMATISM

OBJECT HEIGHT 0.45 [mm]

COMA

0.992

—S

—M

x0.7

x0.7

x0.7

x0.5

x0.5

x0.5

-0.05

0.05
[mm]

-0.05

0.05
[mm]

-1.00

1.00
[mm]

-0.05

0.05
[mm]

-0.992

486.13 [nm]
656.27 [nm]
586.07 [nm]
404.65 [nm]

486.13 [nm]
656.27 [nm]
586.07 [nm]
404.65 [nm]

OBJECT HEIGHT 0.32 [mm]

486.13 [nm]
656.27 [nm]
586.07 [nm]
404.65 [nm]

F I G. 6 A

F I G. 6 B

F I G. 6 C

F I G. 6 D

F I G. 7

SPHERICAL
ABERRATION

NA 0.300

486. 13 [nm]
656. 27 [nm]
586. 07 [nm]
404. 65 [nm]

F I G. 8 A

AMOUNT OF VIOLATION
OF SINE CONDITION

NA 0.300

486. 13 [nm]
656. 27 [nm]
586. 07 [nm]
404. 65 [nm]

F I G. 8 B

ASTIGMATISM

OBJECT HEIGHT 0.90 [mm]

M          S

F I G. 8 C

COMA

1.009

-1.009

OBJECT HEIGHT 0.63 [mm]

486. 13 [nm]
656. 27 [nm]
586. 07 [nm]
404. 65 [nm]

F I G. 8 D

Europäisches
Patentamt

European
Patent Office

Office européen
des brevets

**EUROPEAN SEARCH REPORT**

Application Number

EP 18 17 7240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 192 434 A1 (NIKON CORP [JP]) 2 June 2010 (2010-06-02) * figure 1; example 1 * ----- | 1-15 | INV. G02B21/02 |
| X | US 2016/116724 A1 (ABE KENICHIRO [JP]) 28 April 2016 (2016-04-28) * figure 2 * ----- | 1-15 | |

TECHNICAL FIELDS
SEARCHED      (IPC)

G02B

The present search report has been drawn up for all claims

| Place of search | Date of completion of the search | Examiner |
|---|---|---|
| Munich | 15 October 2018 | Daffner, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 17 7240

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2018

| Patent document cited in search report | | Publication date | Patent family member(s) | | Publication date |
|---|---|---|---|---|---|
| EP 2192434 | A1 | 02-06-2010 | EP | 2192434 A1 | 02-06-2010 |
| | | | JP | 4863132 B2 | 25-01-2012 |
| | | | JP | WO2009035072 A1 | 24-12-2010 |
| | | | US | 2011063735 A1 | 17-03-2011 |
| | | | WO | 2009035072 A1 | 19-03-2009 |
| US 2016116724 | A1 | 28-04-2016 | JP | 6367685 B2 | 01-08-2018 |
| | | | JP | 2016085335 A | 19-05-2016 |
| | | | US | 2016116724 A1 | 28-04-2016 |
| | | | US | 2017322404 A1 | 09-11-2017 |

EPO FORM P0459

For more details about this annex : see Official Journal of the European Patent Office, No. 12/82

**EP 3 415 969 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004118072 A